# EUROPÄISCHE PATENTSCHRIFT

(11) **EP 1 793 036 B1**
(45) Veröffentlichungstag und Bekanntmachung des Hinweises auf die Patenterteilung: **24.09.2014**
(21) Anmeldenummer: 05026311.0
(22) Anmeldetag: 02.12.2005
(51) Int. Cl.: D21F 3/02, B29D 29/00

(54) **Verfahren zur Herstellung flüssigkeitsundurchlässiger Papiermaschinenbänder sowie Beschichtungsvorrichtung hierfür**
Process for manufacturing impermeable papermaking belts and coating apparatus therefor
Procédé de fabrication de bandes imperméables pour machines à papier et dispositif de revêtement pour la mise en oeuvre du procédé

(43) Veröffentlichungstag der Anmeldung: 06.06.2007
(73) Patentinhaber: Heimbach GmbH & Co. KG, 52353 Düren (DE)
(72) Erfinder: Praschak, Dr. Dirk, 47918 Tönisvorst (DE); Telgmann, Dieter, 52372 Kreuzau (DE); Ueck, Peter, 52353 Düren (DE)
(74) Vertreter: Paul, Dieter-Alfred

(56) Entgegenhaltungen:
- EP-A- 0 400 573
- WO-A-96/24262
- WO-A-97/09890
- JP-A- 10 140 403
- JP-A- 10 158 903
- US-A- 369 637
- US-A- 1 160 819
- US-A- 1 726 441
- US-A- 2 436 904
- US-A- 4 277 959
- US-A- 5 727 400

## Beschreibung

Die Erfindung betrifft ein Verfahren zur Herstellung flüssigkeitsundurchlässiger Papiermaschinenbänder durch Beschichten eines Trägerbandes mit Kunststoffmaterial, bei dem ein spaltförmiger Formungskanal mit gegenüberliegenden Begrenzungsflächen gebildet wird, durch den das Trägerband geführt wird, wobei eine Begrenzungsfläche von einem Formungsband gebildet wird, das mit dem Trägerband gleichsinnig und geschwindigkeitsgleich bewegt wird, während dessen das pastöse oder verflüssigte Kunststoffmaterial in den Formungskanal eingespeist und von Trägerband und Formungsband mitgenommen wird, wonach das Formungsband am Ende des Formungskanals von dem Kunststoffmaterial getrennt wird, wobei das Formungsband im Bereich des Formungskanals auf seiner dem Formungskanal abgewandten Seite derart abgestützt wird, dass das Formungsband in einem definierten Abstand zur gegenüberliegenden Begrenzungsfläche geführt wird. Die Erfindung bezieht sich des weiteren auf eine Beschichtungsvorrichtung zur Herstellung flüssigkeitsundurchlässiger Papiermaschinenbänder durch Beschichten eines Trägerbandes mit Kunststoffmaterial, mit einem spaltförmigen Formungskanal, der von gegenüberliegenden Begrenzungsflächen gebildet ist, und mit einer ersten Führungseinrichtung, auf die das Trägerband aufspannbar ist, und mit einem Formungsband, das eine der Begrenzungsflächen bildet und über eine zweite Führungseinrichtung geführt ist, sowie mit einer dem Formungskanal eingangsseitig zugeordneten Zuführeinrichtung für das pastöse oder verflüssigte Kunststoffmaterial, wobei die zweite Führungseinrichtung eine Abstützeinrichtung aufweist, die das Formungsband auf der dem Formungskanal abgewandten Seite längs des Formungskanals abstützt und hierdurch in einem definierten Abstand zur gegenüberliegenden Begrenzungsfläche führt.

Flüssigkeitsundurchlässige Papiermaschinenbänder kommen vor allem in der Pressenpartie einer Papiermaschine zum Einsatz. Sie durchlaufen dort zusammen mit der Papierbahn und einem Pressenfilz Walzen- oder Schuhpressen, in denen Flüssigkeit aus der Papierbahn ausgepresst wird. In erster Linie sind solche Papiermaschinenbänder für den Einsatz in sogenannten Schuhpressen bzw. Breitnippressen entwickelt worden, in denen die Kombination aus Papiermaschinenband, Pressenfilz und Papierbahn in einem Spalt zwischen einer Pressenwalze und einem Pressenschuh hindurchgeführt wird. Über den Pressenschuh wird das Papiermaschinenband in Richtung auf die Gegenwalze über einen bestimmten winkelbereich hydraulisch gepresst, wodurch ein verlängerter Pressenspalt entsteht. Am Auslauf der Schuhpresse folgt die Papierbahn dem auch Transferbelt genannten Papiermaschinenband, während der Pressenfilz möglichst schnell von der Papierbahn weggeführt wird, um eine Rückbefeuchtung zu vermeiden. Solche Schuhpressen sind beispielsweise der US 4,229,253 und DE 32 31 039 C3 zu entnehmen. Papiermaschinenbänder der vorgenannten Art bestehen in der Regel aus einer Kunststoffmatrix und einem in die Kunststoffmatrix eingebetteten Trägerband, das beispielsweise als Gewebe, Gewirke oder Gelege ausgebildet sein kann (vgl. z.B. EP 1 069 235; US 4,229,253; DE 32 31 039 C3). Die Herstellung erfolgt grundsätzlich in der Weise, dass das Kunststoffmaterial in flüssigem oder pastösem Zustand auf das endlos gemachte Trägerband aufgetragen wird und dass man es dann aushärten lässt. Das Auftragen kann auf verschiedene Weise erfolgen, beispielsweise durch Aufrakeln, Übergiessen oder schleudergiessen von pastösem oder verflüssigtem Kunststoffmaterial.

Aus der EP 0 400 573 A1 (vgl. Figuren 11 und 12) ist ein Herstellungsverfahren bekannt, bei dem das Trägerband endlos über zwei walzen geführt wird. Dabei durchläuft das Trägerband einen Formungskanal mit gegenüberliegenden Begrenzungsflächen, von denen die eine durch eine der beiden Walzen und die andere durch ein Formungsband gebildet wird. Das Formungsband ist zwischen zwei Führungswalzen derart aufgespannt, dass es über den Formungskanal unter Vorspannung an dem Trägerband anliegt. Hierdurch soll das in den Eingusstrichter eingespeiste, flüssige Kunststoffmaterial in das Trägerband gepresst werden. Als Kunststoffmaterialien kommen elastomere, thermoplastische Materialien in Frage, beispielsweise Polyurethan, Polypropylen oder dergleichen. Ein ähnliches Verfahren ist in der WO 95/16820 und der EP 0 027 543 B1 offenbart.

Die vorbeschriebene Verfahren sind für die Herstellung von flüssigkeitsundurchlässigen Papiermaschinenbändern wenig geeignet. Es lassen sich damit keine Bänder mit einer vorbestimmten Dicke und Einbettung des Trägerbandes in die Kunststoffmatrix herstellen, weil der auf das Trägerband aufgeprägte Druck kaum kontrollierbar ist und zudem von der eingespeisten Menge des Kunststoffmaterials abhängt. Deshalb haben sich diese Verfahren auch nicht durchsetzen können.

Der Erfindung liegt die Aufgabe zugrunde, ein Verfahren bereitzustellen, mit dem flüssigkeitsundurchlässige Papiermaschinenbänder in gewünschter Formgebung und reproduzierbar hergestellt werden können. Ein zweiter Teil der Aufgabe besteht darin, eine Beschichtungsvorrichtung für die Durchführung dieses Verfahrens zu konzipieren.

Der erste Teil der Aufgabe wird erfindungsgemäss dadurch gelöst, dass der Formungskanal eingangsseitig zu Beginn der Beschichtung temporär geschlossen wird. Grundgedanke ist es, dem Formungsband durch aussenseitige Abstützung einen bestimmten Weg und hierdurch die gewünschte Geometrie des Formungskanals vorzugeben. Das Formungsband wird also in einem definierten Abstand zu der anderen Begrenzungsfläche geführt, so dass die Dicke des Papiermaschinenbandes durch den Verlauf des Formungsbandes bestimmt wird. Mit Hilfe dieses Verfahrens lassen sich flüssigkeitsundurchlässige Papiermaschinenbänder definierter Dicke reproduzierbar herstellen. Durch das erfindungsgemäße Schließen des Formungsbandes wird ein unkontrolliertes Einfliessen des Kunststoffmaterials in den Formungskanal verhindert und eine geometrisch definierte Vorderkante der Kunststoffmatrix über die gesamte Breite erzeugt. Nach dem Umlauf des Trägerbandes kann dann die Beschichtung abgeschlossen werden, indem das Ende der Beschichtung mit dem Anfang verbunden wird.

Bei einer ersten Ausführungsform wird das Trägerband auf der dem Formungsband abgewandten Seite längs des Formungskanals abgestützt, und zwar - wie das Formungsband - vorzugsweise zumindest im wesentlichen über die gesamte Länge und/oder Breite des Formungskanals. Dies kann konkret in der weise geschehen, dass das Trägerband über eine konvexe Abstützfläche und das Formungsband über eine konkave Führungswandung geführt werden, wobei die konvexe Abstützfläche vorteilhafterweise von einer umlaufenden walze gebildet wird, über die das Trägerband im Formungskanal geführt wird. Bei dieser Ausführungsform wird also nur eine der Begrenzungsflächen von einem Formungsband gebildet, während die andere Begrenzungsfläche von der konvexen Abstützfläche gebildet wird.

Damit das Formungsband der konkaven Führungswandung folgt, sind nach der Erfindung Massnahmen zum Anziehen des Formungsbandes an die Führungswandung vorgesehen. Eine Massnahme kann beispielsweise darin bestehen, auf das Formungsband einen Unterdruck auszuüben, der so gross ist, dass das Formungsband sicher an der Führungswand gehalten wird, andererseits aber noch zulässt, dass sich das Formungsband über die Führungswandung bewegen kann. Alternativ dazu oder in Kombination damit kann das Formungsband aber auch magnetisierbar ausgebildet sein, beispielsweise indem es mit ferromagnetischen Partikeln gefüllt ist, wobei dann das Formungsband mittels Magneten an die Führungswandung angezogen wird. Dabei ist die Stärke und die Dichte der Magnete so abgestimmt, dass das Formungsband an der Führungswandung gehalten wird, jedoch noch über diese in Laufrichtung bewegt werden kann.

In einer alternativen Ausführungsform ist nach der Erfindung vorgesehen, dass beide Begrenzungsflächen des Formungskanals von je einem Formungsband, nämlich einem ersten und einem zweiten Formungsband, gebildet werden, die mit dem Trägerband gleichsinning und geschwindigkeitsgleich bewegt werden und die auf ihren dem Formungskanal abgewandten Seiten derart abgestützt werden, dass beide Formungsbänder in einem definierten Abstand zueinander geführt werden. Bei dieser Ausführungsform besteht die Möglichkeit, das Trägerband an einem der Formungsbänder anliegend oder im Abstand zu beiden Formungsbändern durch den Formungskanal zu führen, so dass die Einbettung des Trägerbandes in die Kunststoffmatrix entsprechend den jeweiligen Erfordernissen vorgenommen werden kann. Sofern der Abstand des Trägerbandes zu den Formungsbändern gleich ist, ergibt sich ein symmetrischer Aufbau des Papiermaschinenbandes.

Nach der Erfindung ist ferner vorgesehen, dass Trägerband und beide Formungsbänder jeweils zwischen einem Paar von Führungswalzen aufgespannt werden. Dies kann bei einer ersten Alternative dadurch geschehen, dass das zweite Formungsband mit dem Trägerband gemeinsam über dasselbe Paar von Führungswalzen mitgeführt wird. Alternativ dazu können die Formungsbänder und das Trägerband jeweils mittels eigener Paare von Führungswalzen unabhängig voneinander aufgespannt werden. Dies eröffnet die Möglichkeit, das Trägerband im Abstand zu beiden Formungsbändern durch den Formungskanal zu führen.

Für eine exakte Führung der Formungsbänder ist es zweckmässig, wenn diese zumindest im wesentlichen über die gesamte Länge und/oder Breite des Formungskanals abgestützt werden, beispielsweise durch entsprechende Führungswandungen, über die oder an denen vorbei die Formungsbänder laufen.

In vielen Fällen werden Trägerband und Formungsband bzw. Formungsbänder im Bereich des Formungskanals parallel geführt werden. Dies schliesst jedoch nicht aus, dass sie so geführt werden, dass sich der Abstand der Begrenzungsflächen des Formungskanals in Laufrichtung verändert, also entweder zunimmt oder abnimmt.

Das Formungsband bzw. die Formungsbänder sollten flüssigkeitsundurchlässig und vorzugsweise antiadhäsiv ausgerüstet sein. Es kann beispielsweise als Gewebe, verstärkte Folie, aber auch als Metallband ausgebildet sein. Als antiadhäsive Ausrüstung kommt eine Silikonbeschichtung oder antiadhäsives Polyurethan oder ein Fluorpolymer wie beispielsweise PTFE in Frage.

Für die Durchführung des Verfahrens wird das Trägerband zweckmässigerweise als Endlosband ausgebildet und dann im Umlauf beispielsweise über zumindest zwei Führungswalzen geführt. Auch das Formungsband bzw. zumindest eines der Formungsbänder kann endlos umlaufend geführt werden. Alternativ dazu besteht die Möglichkeit, dass ein Formungsband verwendet wird, das in endlicher Länge vorliegt und das dann von einem Bandvorrat abgezogen wird.

Das Formungsband bzw. die Formungsbänder sollten sich zumindest über die gesamte Breite des verwendeten Trägerbandes erstrecken. Um ein Ausfliessen des Kunststoffmaterials an den Rändern des Trägerbandes zu vermeiden, sollten an dem Trägerband und/oder dem Formungsband bzw. zumindest einem der Formungsbänder Dichtschnüre angebracht werden, die derart vorstehen, dass der Formungskanal seitlich geschlossen wird.

Um eine gleichmässige Befüllung über den Eingang des Formungskanals zu erhalten, sollte das Kunststoffmaterial über die Breite des Formungskanals an mehreren, beabstandeten Stellen eingegossen werden, und zwar zweckmässigerweise so, dass das Kunststoffmaterial auf das Formungsband bzw. eines der Formungsbänder aufgegossen wird. Dies sollte in der Weise geschehen, dass keine Luftblasen eingebracht werden.

Um ein schnelles Aushärten des Kunststoffmaterials zu erreichen, sollte das Papiermaschinenband im Formungskanal und/oder nach verlassen des Formungskanal auf bis zu 150 deg. C, vorzugsweise zwischen 60 deg. C und 80 deg. C erhitzt werden, sei es durch beheizte Walzen und/oder durch externe Heizeinrichtungen, die beispielsweise Wärmestrahlung oder Heissluft erzeugen. Hierbei kann das Papiermaschinenband nach der Beschichtung in Umlauf gehalten werden, bis die Aushärtung beendet ist.

Der Abstand der Begrenzungsflächen des Formungskanals sollte zwischen 2 bis 10 mm eingestellt werden.

Der zweite, sich auf die Beschichtungsvorrichtung beziehende Teil der Aufgabe wird erfindungsgemäss dadurch gelöst, dass dem Formungskanal eingangsseitig eine Verschlusseinrichtung zugeordnet ist, über die der Formungskanal temporär verschließbar ist.

Sofern nur ein einziges Formungsband vorgesehen ist, kann die Führung des Trägerbandes in der Weise geschehen, dass die erste Führungseinrichtung im Bereich des Formungskanals ebenfalls eine Abstützeinrichtung aufweist, wobei diese Abstützeinrichtung das Trägerband in aufgespanntem Zustand auf der dem Formungsband abgewandten Seite abstützt und zwar - wie auch das Formungsband - vorzugsweise über die gesamte Länge und/oder Breite des Formungskanals. Wie schon oben beschrieben, besteht eine Konkretisierung darin, die Abstützeinrichtung für das Trägerband als konvexe Abstützfläche, beispielsweise in Form einer Führungswalze, und die Abstützeinrichtung für das Formungsband als eine konkave Führungswandung auszubilden, wobei auf das Formungsband eine auf die konkave Führungswandung gerichtete Kraft ausgeübt wird, beispielsweise mittels Unterdruck und/oder Magneten.

Alternativ zu der zuvor beschriebenen Ausführungsform können die Begrenzungsflächen des Formungskanals auch von zwei Formungsbändern, nämlich einem ersten und einem zweiten Formungsband, gebildet sein, die gleichsinnig und geschwindigkeitsgleich bewegbar sind und auf ihren dem Formungskanal abgewandten Seiten von Abstützeinrichtungen derart geführt sind, dass beide Formungsbänder einen definierten Abstand zueinander haben, wobei das zweite Formungsband über eine dritte Führungseinrichtung geführt ist. Dabei besteht die Möglichkeit, die erste Führungseinrichtung derart anzuordnen, dass ein darauf aufgespanntes Trägerband an einem der Formungsbänder anliegend oder im Abstand zu beiden Formungsbänder durch den Formungskanal verläuft. Auf diese Weise lassen sich Papiermaschinenbänder herstellen, bei denen das Trägerband in einer gewünschten Ebene, beispielsweise in der Mittelebene, verläuft, so dass das Trägerband vollständig innerhalb der Kunststoffmatrix zu liegen kommt.

Der Verlauf von Trägerband und Formungsbändern kann auf einfache Weise dadurch bestimmt werden, dass sie jeweils zwischen einem Paar von Führungswalzen gerade aufgespannt sind. Dabei besteht die Möglichkeit, dass das zweite Formungsband mit dem Trägerband gemeinsam über dasselbe Paar von Führungwalzen ihrer Führungseinrichtung geführt sind. Alternativ dazu kann vorgesehen sein, dass die erste Führungseinrichtung ein eigenes Paar von Führungswalzen aufweist, auf der das Trägerband unabhängig von den Formungsbändern geführt ist. Auf diese Weise kann durch entsprechende Anordnung dieser Führungswalzen bewirkt werden, dass das Trägerband in einer definierten Ebene durch den Formungskanal geführt wird, sei es im Abstand zu beiden Formungsbändern oder an einem Formungsband anliegend. Vorzugsweise sollte die erste Führungseinrichtung quer zu den Begrenzungsflächen des Formungskanals verschieblich sein, um das Trägerband in einer gewünschten Ebene durch den Formungskanal zu führen.

Nach einem weiteren Merkmal der Erfindung ist vorgesehen, dass die Abstützeinrichtungen jeweils zwischen zwei ein Paar bildenden Führungswalzen im Bereich des Formungskanals angeordnet ist bzw. sind.

Was die Gestaltung der ersten Führungseinrichtung betrifft, sollten zumindest zwei Führungswalzen vorgesehen sein, auf die das Trägerband in Endlosform aufspannbar mittels eines Antriebs in Umlauf bringbar ist. Dabei kann zumindest eine der Führungswalzen als Spannwalze ausgebildet sein. Der Antrieb sollte vorzugsweise umsteuerbar und/oder die Umlaufgeschwindigkeit einstellbar sein.

Die Spaltbreite des Formungskanals sollte in einem Bereich von 2 bis 10 mm, vorzugsweise 4 bis 6 mm, justierbar sein. Die Länge des Formungskanals in Laufrichtung sollte zwischen 30 und 1500 mm, vorzugsweise 80 bis 500 mm liegen.

In der Zeichnung ist die Erfindung anhand von drei Ausführungsbeispielen näher veranschaulicht. Es zeigen:
- Figur 1:: eine erste Beschichtungsvorrichtung gemäss der Erfindung in der Seitenansicht;
- Figur 2:: eine zweite Beschichtungsvorrichtung in der Seitenansicht und
- Figur 3:: eine dritte Beschichtungsvorrichtung in der Seitenansicht.

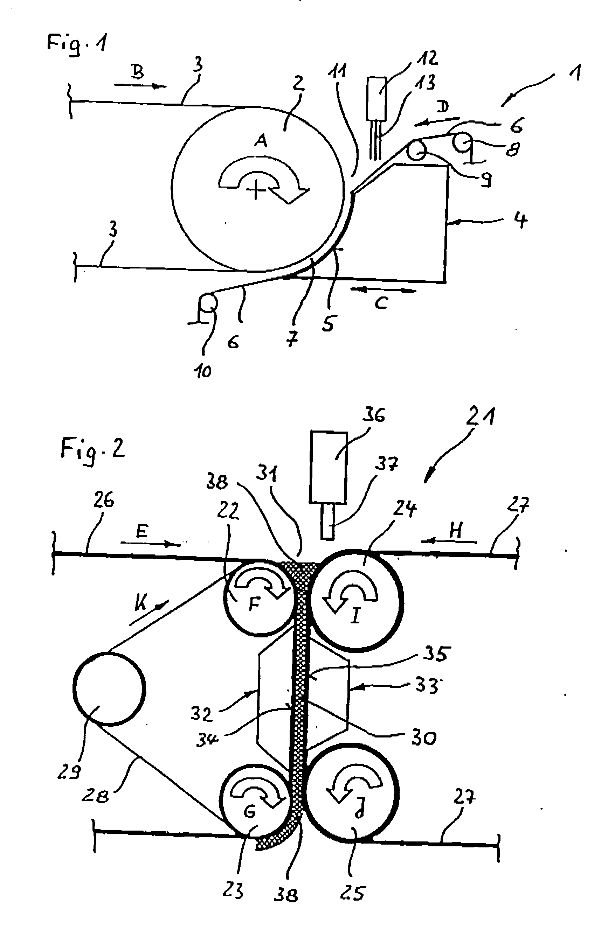

Die in Figur 1 nur teilweise dargestellte Beschichtungsvorrichtung 1 weist eine erste Führungseinrichtung auf, zu der eine erste, zylinderförmige Führungswalze 2 gehört, deren Durchmesser zwischen 800 und 2000 mm liegen kann. Der ersten Führungswalze 2 ist linksseitig eine zweite Führungswalze (nicht gezeichnet) zugeordnet, wobei die Achsen der Führungswalzen 2 parallel zueinander liegen und in einem nicht dargestellten Maschinenrahmen der Beschichtungsvorrichtung 1 gelagert sind.

Auf die Führungswalzen 2 ist ein Trägerband 3 aufgezogen. Eine der beiden Führungswalzen 2 ist als Spannwalze ausgebildet, über die dem Trägerband 3 eine Längsspannung bis zu 15 kN/m aufgeprägt werden kann. Eine der beiden Führungswalzen 2 ist zudem mit einem Antrieb versehen, über die die Führungswalze 2 beim Beschichtungsvorgang im Uhrzeigersinn (Pfeil A) gedreht und das Trägerband 3 in Richtung des Pfeils B bewegt wird. Der Antrieb wird von einem Elektromotor gebildet, der auch umsteuerbar ist und dessen Drehzahl eingestellt werden kann.

Der Führungswalze 2 rechtsseitig zugeordnet ist eine zweite Führungseinrichtung mit einem Führungsschild 4, das im Bereich des unteren rechten Viertels des Umfangs der ersten Führungswalze 2 eine konkave gebogene, sich senkrecht zur Zeichnungsebene über die Länge der ersten Führungswalze 2 erstreckende Führungswandung 5 aufweist. An der Führungswandung 5 wird ein nicht permeables und antiadhäsiv beschichtetes Formungsband 6 geführt, das von einem hier nicht dargestellten vorrat über oberhalb des Führungsschildes 4 angeordnete walzen 8, 9 abgezogen und nach verlassen des Spaltes von dem Trägerband 3 über eine Walze 10 weggeführt wird. Mindestens eine der Walzen 8, 9, 10 ist mit einem Antrieb versehen, der das Formungsband 6 beim Beschichtungsvorgang in Richtung des Pfeils D bewegt.

Das Formungsband 6 liegt an der Führungswandung 5 über deren gesamte Länge in Laufrichtung flächig an. Hierzu hat die Führungswandung 5 Durchgangslöcher, die mit einer Unterdruckquelle verbunden sind. Hierdurch wird auf das Formungsband 6 eine Saugkraft ausgeübt, die das Formungsband 6 in Anlage an der Führungswandung 5 hält, wobei jedoch der Unterdruck so bemessen ist, dass das Formungsband 6 an der Führungswandung 5 vorbei bewegt werden kann.

Das Formungsband 6 und die erste Führungswalze 2 bilden definierte Begrenzungsflächen, zwischen denen sich ein Formungskanal 7 erstreckt, durch den das Trägerband 3 bewegt wird. Der Formungskanal 7 hat in Drehrichtung (Pfeil A) der Führungswalze 2 eine vorbestimmte Spaltbreite, d.h. der Abstand zwischen Formungsband 6 und erster Führungswalze 2 ist sowohl in Drehrichtung als auch in der Erstreckung senkrecht zur Zeichnungsebene definiert und unabhängig vom Trägerband 3 eingestellt. Der Abstand des Formungsbandes 6 zur ersten Führungswalze 2 ist durch Verschiebung des Führungsschildes 4 in einer der Richtungen des Doppelpfeils C - entweder manuell oder durch Sensoren gesteuert - justierbar, so dass sich eine Spaltbreite zwischen 2 bis 10 mm, vorzugsweise 4 bis 6 mm, konstant oder definiert sich in Laufrichtung ändernd einstellen lässt.

Oberhalb des Formungskanals 7 bilden erste Führungswalze 2 und Führungsschild 4 einen Eingusstrichter 11 aus, dem eine Zuführeinrichtung mit mehreren Mischern 12, die jeweils eine Auslaufdüse 13 aufweisen und über die Erstrekkung der ersten Führungswalze 2 und des Führungsschildes 4 senkrecht zur zeichnungsebene verteilt sind, zugeordnet ist. Den Mischern 12 werden unterschiedliche flüssige Kunststoffmaterialien zugeführt, die nach dem Mischen ein Reaktionsgemisch bilden. Die Auslaufdüsen 13 sind oberhalb des Formungsbandes 6 angeordnet, so dass das austretende Reaktionsgemisch bzw. Kunststoffmaterial zunächst an das Formungsband 6 abgegeben und mit diesem in den Formungskanal 7 eingebracht wird.

Der Formungskanal 7 ist - was hier nicht näher dargestellt ist - seitlich geschlossen, so dass das Kunststoffmaterial nicht an den Seiten austreten kann. Sofern das Trägerband 3 weniger breit ist als die Erstreckung des Formungskanals 7 senkrecht zur Zeichnungsebene, werden an den Seitenkanten des Trägerbandes 3 oder auch des Formungsbandes 6 flexible Dichtschnüre befestigt, oder sie werden mit dem jeweiligen Band einlaufen gelassen.

Eine der beiden Führungswalzen 2 ist als Heizwalze ausgebildet. Sie dient dazu, das Trägerband 3 auf Temperaturen zwischen 20 deg. C und 150 deg. C, vorzugsweise zwischen 60 deg. C und 80 deg. C aufzuheizen. Hierdurch wird die Viskosität des Kunststoffmaterials beim Eingiessen über den Eingusstrichter 11 günstig beeinflusst. Ausserdem wird hierdurch die Aushärtereaktion des Kunststoffmaterials beschleunigt.

Zu Beginn des Beschichtungsvorgangs wird der Formungskanal 7 im Bereich des Eingusstrichters 11 mittels einer hier nicht näher dargestellten Schliesseinrichtung temporär verschlossen und flüssiges Kunststoffmaterial über die Auslaufdüsen 13 in den Eingusstrichter 11 eingefüllt. Hierdurch erhält die Beschichtung an der Vorderkante die von der Schliesseinrichtung vorgegebene Form, z. B. eine glatte Vorderkante über die gesamte Breite des Formungskanals 7. Nach der Verfestigung des in den Formungskanal 7 gegebenen Kunststoffmaterials wird das Trägerband 3 durch Antrieb einer der beiden Führungswalzen 2 in Bewegung gesetzt und die Schliesseinrichtung entfernt. Gleichzeitig und gleichsinnig sowie mit gleicher Geschwindigkeit wird auch das Formungsband 6 in Richtung des Pfeils D durch den Formungskanal 7 in Anlage an die Führungswandung 5 geführt und damit weiteres Kunststoffmaterial in den Formungskanal 7 eingebracht. Das Kunststoffmaterial füllt den Formungskanal 7 aus und durchsetzt dabei das Trägerband 3. Auf der Innenseite des Trägerbandes 3 wird durch die Oberfläche der ersten Führungswalze 2 eine glatte Fläche ausgebildet, wobei das Trägerband 3 fast vollständig in dem Kunststoffmaterial eingebettet wird.

Durch Aushärtereaktionen verändert sich die zunächst flüssige Konsistenz des Kunststoffmaterials über die Erstreckung des Formungskanals 7, so dass es am auslaufseitigen Ende des Formungskanals 7 fest ist, also mit dem Trägerband 3 so verbunden ist, dass es an ihm haften bleibt, wenn das so beschichtete Trägerband 3 die erste Führungswalze 2 verlässt und das Formungsband 6 über die Walze 10 weggeführt wird. Der Beschichtungsprozess dauert so lange, bis das Trägerband 3 über seine gesamte Länge beschichtet ist.

Nach Abschluss des Beschichtungsvorgangs wird der Zulauf des Kunststoffmaterials gestoppt und der Formungskanal 7 dadurch geöffnet, dass das Führungsschild 4 von der ersten Führungswalze 2 nach rechts weggefahren wird (Pfeil C). Das beschichtete Trägerband 3 läuft dann noch eine Weile über die Führungswalze 2 um, damit das Kunststoffmaterial komplett ausreagieren kann. Durch die Heizwalze sowie gegebenenfalls durch externe Infrarotbeheizung kann die Aushärtereaktion beschleunigt werden.

Im Anschluss an die Beschichtung erfolgt je nach Erfordernis eine Oberflächenbearbeitung, beispielsweise durch Abdrehen, Schleifen mittels Schleifsteinen oder Schleifbändern und/oder Fräsen mit geeigneten Fräsköpfen. Die hierzu erforderlichen Maschinenteile sind Teil der Beschichtungsvorrichtung 1 und sind so angeordnet, dass die Oberflächenbearbeitung am umlaufenden Band vorgenommen werden kann.

Die in Figur 2 ebenfalls nur teilweise dargestellte Beschichtungsvorrichtung 21 weist zwei Paare von jeweils zwei übereinander im Abstand angeordneten Führungswalzen 22, 23 bzw. 24, 25 auf. Über das erste Paar von Führungswalzen 22, 23 verläuft ein endloses Trägerband 26, das hier nur teilweise dargestellt ist. In dem linksseitigen, nicht dargestellten Teil ist das Trägerband 26 auf zwei Führungswalzen aufgezogen, von denen eine als Spannwalze ausgebildet ist, über die dem Trägerband 26 eine Längsspannung aufgeprägt werden kann. Eine der Führungswalzen 22, 23 ist mit einem Elektromotor als Antrieb versehen, um das Trägerband 26 in Richtung des Pfeils E zu bewegen. Die Führungswalzen 22, 23 werden dabei im Uhrzeigersinn (Pfeile F, G) verdreht.

Über das zweite Paar von Führungswalzen 24, 25 läuft ein erstes, nicht permeables und antiadhäsiv beschichtetes Formungsband 27 in Richtung des Pfeils H. Das erste Formungsband 27 wird von einem Vorrat abgezogen. Eine der Führungswalzen 24, 25 ist mit einem Antrieb versehen, der das Formungsband 27 in Richtung des Pfeils H und die Führungswalzen 24, 25 gegen den Uhrzeigersinn (vgl. Pfeile I, J) bewegt. Um das erste Paar von Führungswalzen 22, 23 ist ein nicht permeables und antiadhäsiv beschichtetes zweites Formungsband 28 geführt, das zwischen den Führungswalzen 22, 23 und dem Trägerband 26 verläuft. Das zweite Formungsband 28 ist endlos ausgebildet und umläuft eine weitere Führungswalze 29, von der es auch gespannt wird. Das zweite Formungsband 28 wird von den Führungswalzen 22, 23 mitgenommen und demgemäss in Richtung des Pfeils K bewegt.

Die Führungswalzen 22, 23, 24, 25 sind so angeordnet, dass Trägerband 26 sowie erstes und zweites Formungsband 27, 28 in den Bereich zwischen den jeweils ein Paar bildenden Führungswalzen 22, 23 bzw. 24, 25 senkrecht und im wesentlichen parallel zueinander verlaufen, wobei zwischen den beiden die Begrenzungsflächen bildenden Formungsbändern 27, 28 ein Formungskanal 30 ausgebildet wird, in dem das Trägerband 26 nach unten geführt wird. Obenseitig bilden die beiden nebeneinander angeordneten Führungswalzen 22, 24 zudem einen Eingusstrichter 31 aus.

Zwischen den beiden jeweils ein Paar bildenden Führungswalzen 22, 23 bzw. 24, 25 sind Führungsschilde 32, 33 stationär angeordnet. Sie bilden vertikale Führungswandungen 34, 35 aus, an denen einerseits das Formungsband 28 und andererseits das Formungsband 27 vorbeilaufen und dabei exakt so geführt werden, dass eine vorgegeben eingestellte Geometrie des Formungskanals 30 verwirklicht wird. Die für das erste Formungsband 27 vorgesehenen Führungswalzen 24, 25 und das zugehörige Führungsschild 33 ist in der Beschichtungsvorrichtung 1 horizontal verschieblich und im Anstellwinkel veränderbar geführt, so dass sich die Spaltbreite des Formungskanals 30 entsprechend den jeweiligen Anforderungen verändern lässt.

Dem Eingusstrichter 31 ist eine Zuführeinrichtung mit einer Mehrzahl von über die Erstreckung der Führungswalzen 22, 23, 24, 25 senkrecht zur Zeichnungsebene verteilten Mischern 36 mit Auslaufdüsen 37 zugeordnet. In den Mischern 36 laufen die verschiedenen Kunststoffkomponenten ein, die dort ein Reaktionsgemisch als Kunststoffmaterial 38 bilden, mit dem das Trägerband 26 beschichtet wird. Die Auslaufdüsen 37 sind oberhalb des Formungsbandes 27 angeordnet, so dass das austretende Kunststoffmaterial 38 zunächst an das Formungsband 27 abgegeben und mit diesem in den Formungskanal 30 eingebracht wird.

Auch hier ist der Formungskanal 30 seitlich geschlossen, und zwar mit den selben Mitteln, wie bei dem Ausführungsbeispiel gemäss Figur 1.

Zu Beginn des Beschichtungsvorgangs wird auch bei dieser Beschichtungsvorrichtung 21 der Eingusstrichter 31 mittels einer hier nicht näher dargestellten Schliesseinrichtung temporär verschlossen, um z.B. eine glatte Vorderkante der Beschichtung zu erhalten. Nach verfestigung des in den Formungskanal 30 gegebenen Kunststoffmaterials 38 wird das Trägerband 26 zusammen mit dem zweiten Formungsband 28 durch Antrieb einer der Führungswalzen 22, 23 inRichtung des Pfeils E bzw. K in Bewegung gesetzt und die Schliesseinrichtung entfernt. Gleichzeitig und gleichsinnig sowie mit gleicher Geschwindigkeit wird auch das erste Formungsband 27 in Richtung des Pfeils H bewegt und damit das darauf aufgebrachte Kunststoffmaterial 38 in den Formungskanal 30 eingebracht. Das Kunststoffmaterial 38 füllt den Formungskanal 30 aus und durchsetzt dabei das Trägerband 26 bis zu dem zweiten Formungsband 28, wobei das Trägerband 26 fast vollständig in dem Kunststoffmaterial 38 eingebettet wird. Durch Aushärtereaktion ist das Kunststoffmaterial 38 am ausgangsseitigen Ende des Formungskanals 30 so fest mit dem Trägerband 26 verbunden, dass es an ihm haften bleibt, wenn das so beschichtete Trägerband 26 die Führungswalze 23 verlässt und das erste Formungsband 27 über die Führungswalze 25 weggeführt wird. Nach Abschluss des Beschichtungsvorgangs wird die Einheit aus Führungswalzen 24, 25 und Führungsschild 33 nach rechts bewegt, wodurch der Formungskanal 30 geöffnet wird. Die weitere Behandlung des mit dem Kunststoffmaterial 38 beschichteten Trägerbandes 26 geschieht in der gleichen Weise wie zu dem Ausführungsbeispiel gemäss Figur 1 beschrieben.

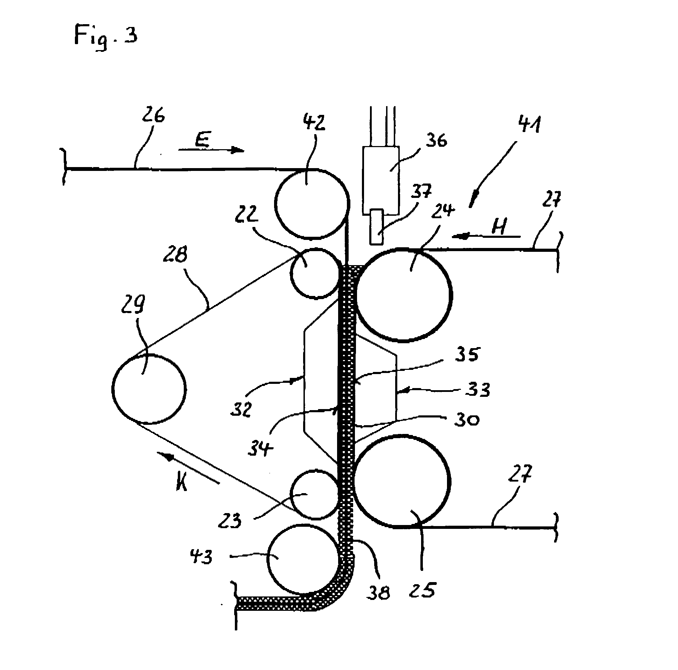

Die in Figur 3 gezeigte Beschichtungsvorrichtung 41 entspricht weitgehend der Beschichtungsvorrichtung 21 gemäss Figur 2, so dass für gleiche Teile gleiche Bezugsziffern verwendet werden und zur Beschreibung der mit diesen Bezugsziffern gekennzeichneten Teile auf die Beschreibung der Beschichtungsvorrichtung 21 gemäss Figur 2 Bezug genommen wird, so dass sich nachstehend auf die Beschreibung der Abweichungen zu der Beschichtungsvorrichtung 21 gemäss Figur 2 beschränkt werden kann.

Die Abweichung betrifft allein die Führung des Trägerbands 26. Bei dem Ausführungsbeispiel gemäss Figur 2 sind Trägerband 26 und zweites Formungsband 28 gemeinsam über die Führungswalzen 22, 23 geführt. Bei der Beschichtungsvorrichtung 41 gemäss Figur 3 ist das Trägerband 26 über zwei zusätzliche Führungswalzen 42, 43 geführt, wobei die obere Führungswalze 42 oberhalb der Führungswalze 22 und die untere Führungswalze 43 unterhalb der Führungswalze 23 angeordnet sind. Über die Führungswalzen 22, 23 verläuft jetzt nur noch das zweite Formungsband 28.

Aufgrund der separaten Führung durch die Führungswalzen 42, 43 kann das Trägerband 26 - wie dargestellt - im gleichen Abstand sowohl zu dem zweiten Formungsband 28 als auch zu dem ersten Formungsband 27 durch den Formungskanal 30 geführt werden, so dass die so erhaltene Beschichtung symmetrisch zur Mittelebene des Trägerbands 26 ist. Die Führungswalzen 42, 43 sind in einem Gerüst der Beschichtungsvorrichtung 41 gelagert, das horizontal beweglich ist, so dass das Trägerband 26 in dem Formungskanal 30 horizontal, d.h. in Richtung auf das eine oder das andere Formungsband 27, 28 unter Beibehaltung einer senkrechten Ebene verschoben werden kann.

## Patentansprüche

1. Verfahren zur Herstellung flüssigkeitsundurchlässiger Papiermaschinenbänder durch Beschichten eines Trägerbandes (3, 26) mit Kunststoffmaterial (38), bei dem ein spaltförmiger Formungskanal (7, 30) mit gegenüberliegenden Begrenzungsflächen gebildet wird, durch den das Trägerband (3, 26) geführt wird, wobei eine Begrenzungsfläche von einem Formungsband (6, 27) gebildet wird, das mit dem Trägerband (6, 26) gleichsinnig und geschwindigkeitsgleich bewegt wird, während dessen das pastöse oder verflüssigte Kunststoffmaterial (38) in den Formungskanal (7, 30) eingespeist und von Trägerband (3, 26) und Formungsband (6, 27) mitgenommen wird, wonach das Formungsband (6, 27) am Ende des Formungskanals (7, 30) von dem Kunststoffmaterial (38) getrennt wird, wobei das Formungsband (6, 27) im Bereich des Formungskanals (7, 30) auf seiner dem Formungskanal (7, 30) abgewandten Seite (5, 32, 33) derart abgestützt wird, dass das Formungsband (6, 27) in einem definierten Abstand zur gegenüberliegenden Begrenzungsfläche geführt wird, **dadurch gekennzeichnet, dass** der Formungskanal (7, 30) eingangsseitig zu Beginn der Beschichtung temporär geschlossen wird.

2. Verfahren nach Anspruch 1, **dadurch gekennzeichnet, dass** das Trägerband (3) auf der dem Formungsband (6) abgewandten Seite längs des Formungskanals (7) abgestützt wird.

3. Verfahren nach Anspruch 2, **dadurch gekennzeichnet, dass** das Trägerband (3) und/oder das Formungsband (6) zumindest im Wesentlichen über die gesamte Länge und/oder Breite des Formungskanals (7) abgestützt wird bzw. werden.

4. Verfahren nach Anspruch 2 oder 3, **dadurch gekennzeichnet, dass** das Trägerband (3) über eine konvexe Abstützfläche (2) als Begrenzungsfläche und das Formungsband (6) über eine konkave Führungswandung (5) geführt werden.

5. Verfahren nach Anspruch 4, **dadurch gekennzeichnet, dass** das Trägerband (3) im Formungskanal (7) über eine umlaufende Walze (2) geführt wird.

6. Verfahren nach Anspruch 4 oder 5, **dadurch gekennzeichnet, dass** das Formungsband (6) an die Führungswandung (5) angezogen wird.

7. Verfahren nach Anspruch 6, **dadurch gekennzeichnet, dass** das Formungsband (6) mittels Unterdruck an die Führungswandung (5) angezogen wird.

8. Verfahren nach Anspruch 6 oder 7, **dadurch gekennzeichnet, dass** das Formungsband magnetisierbar ist und mittels Magnetkraft an die Führungswandung angezogen wird.

9. Verfahren nach Anspruch 1, **dadurch gekennzeichnet, dass** die Begrenzungsflächen des Formungskanals (30) von einem ersten und einem zweiten Formungsband (27, 28) gebildet werden, die mit dem Trägerband (26) gleichsinnig und geschwindigkeitsgleich bewegt werden und die auf ihren dem Formungskanal (30) abgewandten Seiten derart abgestützt werden, dass beide Formungsbänder (27, 28) in einem definierten Abstand zueinander geführt werden.

10. Verfahren nach Anspruch 9, **dadurch gekennzeichnet, dass** das Trägerband (26) an einem der Formungsbänder (27, 28) anliegend oder im Abstand zu beiden Formungsbändern (27, 28) durch den Formungskanal (30) geführt wird.

11. Verfahren nach Anspruch 9 oder 10, **dadurch gekennzeichnet, dass** Trägerband (26) und beide Formungsbänder (27, 28) jeweils zwischen einem Paar von Führungswalzen (22, 23 bzw. 24, 25 bzw. 42, 43) aufgespannt werden.

12. Verfahren nach Anspruch 11, **dadurch gekennzeichnet, dass** das zweite Formungsband (28) mit dem Trägerband (26) gemeinsam über dasselbe Paar von Führungswalzen (22, 23) geführt wird.

13. Verfahren nach Anspruch 11, **dadurch gekennzeichnet, dass** die Formungsbänder (27, 28) und das Trägerband (26) jeweils mittels eigener Paare von Führungswalzen (22, 23 bzw. 24, 25 bzw. 42, 43) unabhängig voneinander aufgespannt werden.

14. Verfahren nach einem der Ansprüche 9 bis 13, **dadurch gekennzeichnet, dass** die Formungsbänder (27, 28) zumindest im Wesentlichen über die gesamte Länge und/oder Breite des Formungskanals abgestützt werden.

15. Verfahren nach einem der Ansprüche 1 bis 14, **dadurch gekennzeichnet, dass** Trägerband (3, 26) und Formungsband (6) bzw. Formungsbänder (27, 28) im Bereich des Formungskanals (7, 30) parallel geführt werden.

16. Verfahren nach einem der Ansprüche 1 bis 14, **dadurch gekennzeichnet, dass** das Formungsband (6) bzw. die Formungsbänder (27, 28) im Bereich des Formungskanals (7, 30) derart geführt wird bzw. werden, dass sich der Abstand der Begrenzungsflächen des Formungskanals (7, 30) in Laufrichtung verändert.

17. Verfahren nach einem der Ansprüche 1 bis 16, **dadurch gekennzeichnet, dass** ein flüssigkeitsundurchlässiges Formungsband (6) bzw. solche Formungsbänder (27, 28) verwendet wird bzw. werden.

18. Verfahren nach einem der Ansprüche 1 bis 17, **dadurch gekennzeichnet, dass** ein antiadhäsiv ausgerüstetes Formungsband (6) bzw. solche Formungsbänder (27, 28) verwendet wird bzw. werden.

19. Verfahren nach einem der Ansprüche 1 bis 18, **dadurch gekennzeichnet, dass** das Trägerband (3, 26) als Endlosband im Umlauf geführt wird.

20. Verfahren nach einem der Ansprüche 1 bis 14, **dadurch gekennzeichnet, dass** das Formungsband (6) bzw. wenigstens eines der Formungsbänder (27, 28) endlos umlaufend geführt wird.

21. Verfahren nach einem der Ansprüche 1 bis 20, **dadurch gekennzeichnet, dass** ein Formungsband (6) bzw. wenigstens ein Formungsband (27) endlicher Länge verwendet wird, das von einem Bandvorrat abgezogen wird.

22. Verfahren nach einem der Ansprüche 1 bis 21, **dadurch gekennzeichnet, dass** ein Formungsband (6) bzw. Formungsbänder (27, 28) verwendet wird bzw. werden, das bzw. die sich zumindest über die gesamte Breite des Trägerbandes (3, 26) erstreckt bzw. erstrecken.

23. Verfahren nach einem der Ansprüche 1 bis 22, **dadurch gekennzeichnet, dass** an den Rändern des Trägerbandes (3, 26) und/oder des Formungsbandes (6) bzw. wenigstens eines Formungsbandes (27, 28) Dichtschnüre angebracht werden.

24. Verfahren nach einem der Ansprüche 1 bis 23, **dadurch gekennzeichnet, dass** das Kunststoffmaterial (38) über die Breite des Formungskanals (7, 30) an mehreren, beabstandeten Stellen eingegossen wird.

25. Verfahren nach einem der Ansprüche 1 bis 24, **dadurch gekennzeichnet, dass** das Kunststoffmaterial (38) auf das Formungsband (6) bzw. eines der Formungsbänder (27, 28) aufgegossen wird.

26. Verfahren nach einem der Ansprüche 1 bis 25, **dadurch gekennzeichnet, dass** das Papiermaschinenband im Formungskanal (7, 30) und/oder nach Verlassen des Formungskanals (7, 30) beheizt wird.

27. Verfahren nach Anspruch 26, **dadurch gekennzeichnet, dass** das Papiermaschinenband über beheizte Walzen und/oder über externe Heizeinrichtungen beheizt wird.

28. Verfahren nach einem der Ansprüche 1 bis 27, **dadurch gekennzeichnet, dass** das Papiermaschinenband nach der Beschichtung in Umlauf gehalten wird.

29. Verfahren nach einem der Ansprüche 1 bis 28, **dadurch gekennzeichnet, dass** der Abstand der Begrenzungsflächen des Formungskanals (7, 30) zwischen 2 bis 10 mm eingestellt wird.

30. Beschichtungsvorrichtung (1, 21, 41) zur Herstellung flüssigkeitsundurchlässiger Papiermaschinenbänder durch Beschichten eines Trägerbandes (3, 26) mit Kunststoffmaterial (38), mit einem spaltförmigen Formungskanal (7, 30), der von gegenüberliegenden Begrenzungsflächen gebildet ist, und mit einer ersten Führungseinrichtung, auf die das Trägerband (3, 26) aufspannbar ist, und mit einem Formungsband (6, 27), das eine der Begrenzungsflächen bildet und über eine zweite Führungseinrichtung geführt ist, sowie mit einer dem Formungskanal (7, 30) eingangsseitig zugeordneten Zuführeinrichtung (12, 36) für das pastöse oder verflüssigte Kunststoffmaterial (38), wobei die zweite Führungseinrichtung eine Abstützeinrichtung (5, 33) aufweist, die das Formungsband (6, 27) auf der dem Formungskanal (7, 30) abgewandten Seite längs des Formungskanals (7, 30) abstützt und hierdurch in einem definierten Abstand zur gegenüberliegenden Begrenzungsfläche führt, **dadurch gekennzeichnet, dass** dem Formungskanal (7, 30) eingangsseitig eine Verschlusseinrichtung zugeordnet ist, über die der Formungskanal (7, 30) temporär verschließbar ist.

31. Beschichtungsvorrichtung nach Anspruch 30, **dadurch gekennzeichnet, dass** die erste Führungseinrichtung im Bereich des Formungskanals (7) ebenfalls eine Abstützeinrichtung (2) aufweist, wobei die Abstützeinrichtung (2) das Trägerband (3) in aufgespanntem Zustand auf der dem Formungsband (6) abgewandten Seite abstützt.

32. Beschichtungsvorrichtung nach Anspruch 31, **dadurch gekennzeichnet, dass** sich die Abstützeinrichtungen (2, 4) im Wesentlichen über die gesamte Länge und/oder Breite des Formungskanals (7) erstrecken.

33. Beschichtungsvorrichtung nach Anspruch 31 oder 32, **dadurch gekennzeichnet, dass** die Abstützeinrichtung für das Trägerband (3) eine konvexe Abstützfläche (2) und die Abstützeinrichtung (4) für das Formungsband (6) eine konkave Führungswandung (5) aufweisen.

34. Beschichtungsvorrichtung nach Anspruch 33, **dadurch gekennzeichnet, dass** die konvexe Abstützfläche von einer umlaufenden Abstützwalze (2) gebildet ist.

35. Beschichtungsvorrichtung nach Anspruch 33 oder 34, **dadurch gekennzeichnet, dass** die Abstützeinrichtung (4) für das Formungsband (6) Mittel zum Aufprägen einer auf die konkave Führungsfläche (5) gerichteten Kraft aufweist, die auf das Formungsband (6) einwirkt.

36. Beschichtungsvorrichtung nach Anspruch 35, **dadurch gekennzeichnet, dass** die Abstützeinrichtung (4) eine auf das Formungsband (6) wirkende Unterdruckeinrichtung aufweist.

37. Beschichtungsvorrichtung nach Anspruch 36, **dadurch gekennzeichnet, dass** das Formungsband (27) magnetisierbar ausgebildet ist und die zugehörige Abstützeinrichtung (4) Magnete aufweist.

38. Beschichtungsvorrichtung nach Anspruch 30, **dadurch gekennzeichnet, dass** die Begrenzungsflächen des Formungskanals (30) von einem ersten und einem zweiten Formungsband (27, 28) gebildet sind, die gleichsinnig und geschwindigkeitsgleich bewegbar sind, und auf ihren dem Formungskanal (30) abgewandten Seiten von Abstützeinrichtungen (32, 33) derart geführt sind, dass beide Formungsbänder (27, 28) einen definierten Abstand zueinander haben, wobei das zweite Formungsband (28) über eine dritte Führungseinrichtung geführt ist.

39. Beschichtungsvorrichtung nach Anspruch 38, **dadurch gekennzeichnet, dass** die erste Führungseinrichtung derart angeordnet ist, dass ein darauf aufgespanntes Trägerband (3, 26) an einem der Formungsbänder (27, 28) anliegend oder im Abstand zu beiden Formungsbändern (27, 28) durch den Formungskanal (30) verläuft.

40. Beschichtungsvorrichtung nach Anspruch 38 oder 39, **dadurch gekennzeichnet, dass** Trägerband (26) und beide Formungsbänder (27, 28) jeweils zwischen einem Paar von Führungswalzen (22, 23 bzw. 24, 25 bzw. 42, 43) gerade aufgespannt sind.

41. Beschichtungsvorrichtung nach Anspruch 40, **dadurch gekennzeichnet, dass** das zweite Formungsband (28) mit dem Trägerband (26) gemeinsam über dasselbe Paar von Führungswalzen (22, 23) ihrer Führungseinrichtungen geführt sind.

42. Beschichtungsvorrichtung nach Anspruch 40, **dadurch gekennzeichnet, dass** die erste Führungseinrichtung ein eigenes Paar von Führungswalzen (42, 43) aufweist, auf der das Trägerband (26) unabhängig von den Formungsbändern (27, 28) geführt ist.

43. Beschichtungsvorrichtung nach Anspruch 42, **dadurch gekennzeichnet, dass** die erste Führungseinrichtung quer zu den Begrenzungsflächen des Formungskanals (30) verschieblich ist.

44. Beschichtungsvorrichtung nach einem der Ansprüche 40 bis 43, **dadurch gekennzeichnet, dass** die Abstützeinrichtungen (32, 33) jeweils zwischen zwei ein Paar bildenden Führungswalzen (22, 23; 24, 25) im Bereich des Formungskanals (30) angeordnet sind.

45. Beschichtungsvorrichtung nach einem der Ansprüche 30 bis 44, **dadurch gekennzeichnet, dass** Trägerband (3, 26) und Formungsband (6) bzw. Formungsbänder (27, 28) im Bereich des Formungskanals (7, 30) parallel geführt sind.

46. Beschichtungsvorrichtung nach einem der Ansprüche 30 bis 45, **dadurch gekennzeichnet, dass** Trägerband (26) und Formungsband (6) bzw. Formungsbänder (27, 28) im Bereich des Formungskanals (7, 30) derartig geführt sind, dass sich der Abstand der Begrenzungsflächen des Formungskanals (7, 30) in Laufrichtung verändert.

47. Beschichtungsvorrichtung nach einem der Ansprüche 30 bis 47, **dadurch gekennzeichnet, dass** das Formungsband (6) bzw. die Formungsbänder (27, 28) flüssigkeitsundurchlässig ist bzw. sind.

48. Beschichtungsvorrichtung nach einem der Ansprüche 30 bis 47, **dadurch gekennzeichnet, dass** das Formungsband (6) bzw. die Formungsbänder (27, 28) antiadhäsiv ausgerüstet ist bzw. sind.

49. Beschichtungsvorrichtung nach einem der Ansprüche 30 bis 48, **dadurch gekennzeichnet, dass** die erste Führungseinrichtung zumindest zwei Führungswalzen (2 bzw. 22, 23 bzw. 42, 43) aufweist, auf die das Trägerband (3, 26) in Endlosform aufspannbar und mittels eines Antriebs in Umlauf bringbar ist.

50. Beschichtungsvorrichtung nach Anspruch 49, **dadurch gekennzeichnet, dass** zumindest eine der Führungswalzen (2 bzw. 22, 23 bzw. 42, 43) als Spannwalze ausgebildet ist.

51. Beschichtungsvorrichtung nach Anspruch 49 oder 50, **dadurch gekennzeichnet, dass** der Antrieb umsteuerbar und/oder die Umlaufgeschwindigkeit einstellbar ist.

52. Beschichtungsvorrichtung nach einem der Ansprüche 30 bis 51, **dadurch gekennzeichnet, dass** das Formungsband (6) bzw. wenigstens eines der Formungsbänder (27) endliche Länge hat und von einem Bandvorrat ausgeht.

53. Beschichtungsvorrichtung nach einem der Ansprüche 30 bis 52, **dadurch gekennzeichnet, dass** das Formungsband (6) bzw. wenigstens eines der Formungsbänder (28) endlos ausgebildet und im Umlauf geführt ist.

54. Beschichtungsvorrichtung nach einem der Ansprüche 30 bis 53, **dadurch gekennzeichnet, dass** die Zuführeinrichtung für das Kunststoffmaterial (38) mehrere Zuführorgane (12, 36) aufweist, die über die Breite des Formungskanals (7, 30) verteilt sind.

55. Beschichtungsvorrichtung nach einem der Ansprüche 30 bis 54, **dadurch gekennzeichnet, dass** die Zuführeinrichtung(en) (12, 36) derart angeordnet ist bzw. sind, dass das Kunststoffmaterial (38) auf das Formungsband (6) bzw. eines der Formungsbänder (27, 28) aufgegossen wird.

56. Beschichtungsvorrichtung nach einem der Ansprüche 30 bis 55, **dadurch gekennzeichnet, dass** eine Heizeinrichtung zur Beheizung des Papiermaschinenbandes im Formungskanal (7, 30) oder nach Verlassen des Formungskanals (7, 30) vorgesehen ist.

57. Beschichtungsvorrichtung nach Anspruch 56, **dadurch gekennzeichnet, dass** die Heizeinrichtung als zumindest eine Heizwalze, über die das Papiermaschinenband geführt ist, und/oder als externe Beheizungseinrichtung ausgebildet ist.

58. Beschichtungsvorrichtung nach einem der Ansprüche 30 bis 57, **dadurch gekennzeichnet, dass** zumindest eine der Führungseinrichtungen derart ausgebildet ist, dass der Abstand der Begrenzungsflächen des Formungskanals (7, 30) einstellbar ist.

59. Beschichtungsvorrichtung nach einem der Ansprüche 30 bis 58, **dadurch gekennzeichnet, dass** an zumindest einer der Führungseinrichtungen und/oder am Formungsband (6) bzw. einem der Formungsbänder (27, 28) und/oder am Trägerband (3, 26) randseitig vorstehende Dichtschnüre anbringbar sind.

60. Beschichtungsvorrichtung nach einem der Ansprüche 30 bis 59, **dadurch gekennzeichnet, dass** die Länge des Formungskanals (7, 30) in Laufrichtung 30 bis 1500 mm beträgt.

## Claims

1. A method for producing paper machine belts that are impermeable to liquid by coating a carrier belt (3, 26) with plastic material (38), wherein a slot-shaped shaping channel (7, 30) having opposing boundary surfaces is formed through which the carrier belt (3, 26) is guided, a boundary surface being formed by a shaping belt (6, 27) which is moved in the same direction and at the same speed as the carrier belt (3, 26), while the pasty or liquefied plastic material (38) is fed into the shaping channel (7, 30) and is carried by the carrier belt (3, 26) and the shaping belt (6, 27), after which the shaping belt (6, 27) is separated from the plastic material (38) at the end of the shaping channel (7, 30), the shaping belt (6, 27) being supported in the region of the shaping channel (7, 30) on its side (5, 32, 33) facing away from the shaping channel (7, 30) such that the shaping belt (6, 27) is guided a defined distance away from the opposing boundary surface, **characterised in that** the shaping channel (7, 30) is temporarily closed on the input side when coating starts.

2. The method according to Claim 1, **characterised in that** the carrier belt (3) is supported on the side of the shaping channel (7) facing away from the shaping belt (6) along the shaping channel (7).

3. The method according to Claim 2, **characterised in that** the carrier belt (3) and/or the shaping belt (6) is or are supported at least substantially over the entire length and/or width of the shaping channel (7).

4. The method according to Claim 2 or 3, **characterised in that** the carrier belt (3) is guided over a convex support surface (2) as a boundary surface and the shaping belt (6) is guided over a concave guiding wall (5).

5. The method according to Claim 4, **characterised in that** the carrier belt (3) is guided in the shaping channel (7) over a revolving roller (2).

6. The method according to Claim 4 or 5, **characterised in that** the shaping belt (6) is pulled against the guiding wall (5).

7. The method according to Claim 6, **characterised in that** the shaping belt (6) is pulled against the guiding wall (5) by means of negative pressure.

8. The method according to Claim 6 or 7, **characterised in that** the shaping belt can be magnetised and is pulled against the guiding wall by means of magnetic force.

9. The method according to Claim 1, **characterised in that** the boundary surfaces of the shaping channel (30) are formed by a first and a second shaping belt (27, 28) which are moved in the same direction and at the same speed as the carrier belt (26) and which are supported on their sides facing away from the shaping channel (30) such that both shaping belts (27, 28) are guided a defined distance apart from one another.

10. The method according to Claim 9, **characterised in that** the carrier belt (26) is guided through the shaping channel (30) resting against one of the shaping belts (27, 28) or a distance away from the two shaping belts (27, 28).

11. The method according to Claim 9 or 10, **characterised in that** the carrier belt (26) and the two shaping belts (27, 28) are respectively stretched between a pair of guide rollers (22, 23, or 24, 25 or 42, 43).

12. The method according to Claim 11, **characterised in that** the second shaping belt (28) is guided together with the carrier belt (26) over the same pair of guide rollers (22, 23).

13. The method according to Claim 11, **characterised in that** the shaping belts (27, 28) and the carrier belt (26) are respectively stretched independently of one another by means of their own pairs of guide rollers (22, 23 or 24, 25 or 42, 43).

14. The method according to any of Claims 9 to 13, **characterised in that** the shaping belts (27, 28) are supported at least substantially over the entire length and/or width of the shaping channel.

15. The method according to any of Claims 1 to 14, **characterised in that** the carrier belt (3, 26) and the shaping belt (6) or shaping belts (27, 28) are guided in parallel in the region of the shaping channel (7, 30).

16. The method according to any of Claims 1 to 14, **characterised in that** the shaping belt (6) or the shaping belts (27, 28) is or are guided in the region of the shaping channel (7, 30) such that the distance between the boundary surfaces of the shaping channel (7, 30) changes in the direction of travel.

17. The method according to any of Claims 1 to 16, **characterised in that** a shaping belt (6) that is impermeable to liquid or such shaping belts (27, 28) is or are used.

18. The method according to any of Claims 1 to 17, **characterised in that** and anti-adhesively equipped shaping belt (6) or such shaping belts (27, 28) is or are used.

19. The method according to any of Claims 1 to 18, **characterised in that** the carrier belt (3, 26) is guided in circulation as an endless belt.

20. The method according to any of Claims 1 to 14, **characterised in that** the shaping belt (6) or at least one of the shaping belts (27, 28) is guided endlessly in circulation.

21. The method according to any of Claims 1 to 20, **characterised in that** a shaping belt (6) or at least one shaping belt (27) of finite length is used which is taken from a belt supply.

22. The method according to any of Claims 1 to 21, **characterised in that** a shaping belt (6) or shaping belts (27, 28) is or are used which extends or extend at least over the entire width of the carrier belt (3, 26).

23. The method according to any of Claims 1 to 22, **characterised in that** sealing cords are attached to the edges of the carrier belt (3, 26) and/or of the shaping belt (6) or of at least one shaping belt (27, 28).

24. The method according to any of Claims 1 to 23, **characterised in that** the plastic material (38) is poured in over the width of the shaping channel (7, 30) at a number of points spaced apart from one another.

25. The method according to any of Claims 1 to 24, **characterised in that** the plastic material (38) is poured onto the shaping belt (6) or one of the shaping belts (27, 28).

26. The method according to any of Claims 1 to 25, **characterised in that** the paper machine belt is heated in the shaping channel (7, 30) and/or after leaving the shaping channel (7, 30).

27. The method according to Claim 26, **characterised in that** the paper machine belt is heated by heated rollers and/or by external heating devices.

28. The method according to any of Claims 1 to 27, **characterised in that** the paper machine belt continues to circulate after the coating.

29. The method according to any of Claims 1 to 28, **characterised in that** the distance between the boundary surfaces of the shaping channel (7, 30) is set at between 2 and 10 mm.

30. A coating apparatus (1, 21, 41) for producing paper machine belts that are impermeable to liquid by coating a carrier belt (3, 26) with plastic material (38), having a slot-shaped shaping channel (7, 30) which is formed by opposing boundary surfaces, and having a first guiding device over which the carrier belt (3, 26) can be stretched, and having a shaping belt (6, 27) which forms one of the boundary surfaces and is guided over a second guiding device, and having a delivery device (12, 36) for the pasty or liquefied plastic material (38) assigned on the input side to the shaping channel (7, 30), the second guiding device having a supporting device (5, 33) which supports the shaping belt (6, 27) along the shaping channel (7, 30) on the side facing away from the shaping channel (7, 30) and in this way guides a defined distance away from the opposing boundary surface, **characterised in that** a closing device is assigned on the input side to the shaping channel (7, 30), by means of which the shaping channel (7, 30) can be temporarily closed.

31. The coating apparatus according to Claim 30, **characterised in that** the first guiding device also has a supporting device (2) in the region of the shaping channel (7), the supporting device (2) supporting the carrier belt (3) in the stretched state on the side facing away from the shaping belt (6).

32. The coating apparatus according to Claim 31, **characterised in that** the supporting devices (2, 4) extend substantially over the entire length and/or width of the shaping channel (7).

33. The coating apparatus according to Claim 31 or 32, **characterised in that** the supporting device for the carrier belt (3) has a convex supporting surface (2) and the supporting device (4) for the shaping belt (6) has a concave guiding wall (5).

34. The coating apparatus according to Claim 33, **characterised in that** the convex supporting surface is formed by a revolving support roller (2).

35. The coating apparatus according to Claim 33 or 34, **characterised in that** the supporting device (4) for the shaping belt (6) has means for applying a force directed at the concave guiding surface (5) and which acts on the shaping belt (6).

36. The coating apparatus according to Claim 35, **characterised in that** the supporting device (4) has a negative pressure device acting on the shaping belt (6).

37. The coating apparatus according to Claim 36, **characterised in that** the shaping belt (27) can be made to be magnetisable and the corresponding supporting device (4) has magnets.

38. The coating apparatus according to Claim 30, **characterised in that** the boundary surfaces of the shaping channel (30) are formed by a first and a second shaping belt (27, 28) which can be moved in the same direction and at the same speed, and are guided on their sides facing away from the shaping channel (30) by supporting devices (32, 33) such that both shaping belts (27, 28) are spaced apart from one another by a defined distance, the second shaping belt (28) being guided by a third guiding device.

39. The coating apparatus according to Claim 38, **characterised in that** the first guiding device is arranged such that a carrier belt (3, 26) stretched over the latter runs through the shaping channel (30) resting against one of the shaping belts (27, 28) or a distance away from both shaping belts (27, 28).

40. The coating apparatus according to Claim 38 or 39, **characterised in that** the carrier belt (26) and the two shaping belts (27, 28) are respectively stretched out straight between a pair of guide rollers (22, 23 or 24, 25 or 42, 43).

41. The coating apparatus according to Claim 40, **characterised in that** the second shaping belt (28) together with the carrier belt (26) are guided over the same pair of guide rollers (22, 23) of their guiding devices.

42. The coating apparatus according to Claim 40, **characterised in that** the first guiding device has its own pair of guide rollers (42, 43) over which the carrier belt (26) is guided independently of the shaping belts (27, 28).

43. The coating apparatus according to Claim 42, **characterised in that** the first guiding device can be displaced transversely to the boundary surfaces of the shaping channel (30).

44. The coating apparatus according to any of Claims 40 to 43, **characterised in that** the supporting devices (32, 33) are respectively arranged between two guide rollers (22, 23; 24, 25) forming a pair in the region of the shaping channel (30).

45. The coating apparatus according to any of Claims 30 to 44, **characterised in that** the carrier belt (3, 26) and the shaping belt (6) or shaping belts (27, 28) are guided in parallel in the region of the shaping channel (7, 30).

46. The coating apparatus according to any of Claims 30 to 45, **characterised in that** the carrier belt (26) and the shaping belt (6) or shaping belts (27, 28) is or are guided in the region of the shaping channel (7, 30) such that the distance between the boundary surfaces of the shaping channel (7, 30) changes in the direction of travel.

47. The coating apparatus according to any of Claims 30 to 47, **characterised in that** the shaping belt (6) or the shaping belts (27, 28) is or are impermeable to liquid.

48. The coating apparatus according to any of Claims 30 to 47, **characterised in that** the shaping belt (6) or the shaping belts (27, 28) is or are equipped anti-adhesively.

49. The coating apparatus according to any of Claims 30 to 48, **characterised in that** the first guiding device has at least two guide rollers (2 or 22, 23 or 42, 43) over which the carrier belt (3, 26) can be stretched in endless form and can be caused to circulate by means of a drive.

50. The coating apparatus according to Claim 49, **characterised in that** at least one of the guide rollers (2 or 22, 23 or 42, 43) is in the form of a tension roller.

51. The coating apparatus according to Claim 49 or 50, **characterised in that** the drive can be rerouted and/or the circulation speed can be adjusted.

52. The coating apparatus according to any of Claims 30 to 51, **characterised in that** the shaping belt (6) or at least one of the shaping belts (27) can be of finite length and runs from a belt supply.

53. The coating apparatus according to any of Claims 30 to 52, **characterised in that** the shaping belt (6) or at least one of the shaping belts (28) is endless in form and is guided in circulation.

54. The coating apparatus according to any of Claims 30 to 53, **characterised in that** the supply device for the plastic material (38) has a number of supply components (12, 36) distributed over the width of the shaping channel (7, 30).

55. The coating apparatus according to any of Claims 30 to 54, **characterised in that** the supply device(s) (12, 36) is or are arranged such that the plastic material (38) is poured onto the shaping belt (6) or one of the shaping belts (27, 28).

56. The coating apparatus according to any of Claims 30 to 55, **characterised in that** a heating device is provided for heating the paper machine belt in the shaping channel (7, 30) or after leaving the shaping channel (7, 30).

57. The coating apparatus according to Claim 56, **characterised in that** the heating device is in the form of at least one heating roller over which the paper machine belt is guided and/or of an external heating device.

58. The coating apparatus according to any of Claims 30 to 57, **characterised in that** at least one of the guiding devices is designed such that the distance between the boundary surfaces of the shaping channel (7, 30) can be adjusted.

59. The coating apparatus according to any of Claims 30 to 58, **characterised in that** sealing cords projecting at the edge can be attached to at least one of the guiding devices and/or to the shaping belt (6) or one of the shaping belts (27, 28) and/or to the carrier belt (3, 26).

60. The coating apparatus according to any of Claims 30 to 59, **characterised in that** the length of the shaping channel (7, 30) in the direction of travel is 30 to 1500 mm.

## Revendications

1. Procédé de production de bandes imperméables pour machines à papier par le recouvrement d' une bande porteuse (3, 26) avec une matière plastique (38) au cours duquel un canal de façonnage en forme de fente (7, 30), par lequel la bande porteuse (3, 26) est guidée, est formé avec des surfaces de délimitation en face l'une de l'autre, une surface de délimitation étant formée par une bande de façonnage (6, 27) déplacée dans la même direction et à la même vitesse que la bande porteuse (6, 26), durant quoi la matière plastique (38) pâteuse ou liquide est injectée dans le canal de façonnage (7, 30) puis entraînée par la bande porteuse (3, 26) et la bande de façonnage (6, 27), après quoi la bande de façonnage (6, 27) est séparée du canal de façonnage (7, 30) par la matière plastique (38), la bande de façonnage (6, 27) étant soutenue dans la zone du canal de façonnage (7, 30) sur son côté (5, 32, 33) opposé au canal de façonnage (7, 30) de façon à ce que la bande de façonnage (6, 27) soit déplacée à un écart défini par rapport à la surface de délimitation qui lui est opposée, **caractérisé en ce que** le canal de façonnage (7, 30) est refermé de façon temporaire du côté de l'entrée lorsque commence le recouvrement.

2. Procédé selon la revendication 1, **caractérisé en ce que** la bande porteuse (3) sur le côté opposé à la bande de façonnage (6) le long du canal de façonnage (7).

3. Procédé selon la revendication 2, **caractérisé en ce que** la bande porteuse (3) et/ou la bande de façonnage (6) est/sont soutenue(s) au moins essentiellement sur toute la longueur et/ou largeur du canal de façonnage (7).

4. Procédé selon la revendication 2 ou 3, **caractérisé en ce que** la bande porteuse (3) et la bande de façonnage (6) sont respectivement déplacées sur une surface de support convexe (2) et une paroi de guidage concave (5).

5. Procédé selon la revendication 4, **caractérisé en ce que** la bande porteuse (3) est déplacée dans le canal de façonnage (7) par un cylindre rotatif (2).

6. Procédé selon la revendication 4 ou 5, **caractérisé en ce que** la bande de façonnage (6) est serrée contre la paroi de guidage (5).

7. Procédé selon la revendication 6, **caractérisé en ce que** la bande de façonnage (6) est serrée contre la paroi de guidage (5) par dépression.

8. Procédé selon les revendications 6 ou 7, **caractérisé en ce que** la bande de façonnage est magnétisable et peut être serrée contre la paroi de guidage par la force magnétique.

9. Procédé selon la revendication 1, **caractérisé en ce que** les surfaces de délimitation du canal de façonnage (30) sont formées par une première et une seconde bandes de façonnage (27, 28) déplacées dans la même direction et à la même vitesse que la bande porteuse (26) et soutenues de leurs côtés opposés au canal de façonnage (30) de façon à ce que les deux bandes de façonnages (27, 28) se déplacent séparées par un écart défini l'une de l'autre.

10. Procédé selon la revendication 9, **caractérisé en ce que** la bande porteuse (26) est déplacée contre l'une des bandes de façonnage (27, 28) ou à distance des deux bandes de façonnage (27, 28) par le canal de façonnage (30).

11. Procédé selon les revendications 9 ou 10, **caractérisé en ce que** la bande porteuse (26) et les deux bandes de façonnage (27, 28) sont chacune tendues entre une paire de cylindres de guidage (22, 23 ou 24, 25 ou 42, 43).

12. Procédé selon la revendication 11, **caractérisé en ce que** la seconde bande de façonnage (28) est déplacée conjointement avec la bande porteuse (26) par la même paire de cylindres de guidage (22, 23).

13. Procédé selon la revendication 11, **caractérisé en ce que** les bandes de façonnage (27, 28) et la bande porteuse (26) sont chacune tendues indépendamment l'une de l'autre au moyen de leur propre paire de cylindres de guidage (22, 23 ou 24, 25 ou 42, 43).

14. Procédé selon l'une des revendications 9 à 13, **caractérisé en ce que** les bandes de façonnage (27, 28) sont soutenues au moins essentiellement sur toute la longueur et/ou largeur du canal de façonnage.

15. Procédé selon l'une des revendications 9 à 13, **caractérisé en ce que** la bande porteuse (3, 26) et la bande de façonnage (6) ou les bandes de façonnage (27, 28) se déplacent dans la zone du canal de façonnage (7, 30) parallèlement l'un à l'autre.

16. Procédé selon l'une des revendications 1 à 14, **caractérisé en ce que** la bande de façonnage (6) ou les bandes de façonnage (27, 28) est/sont déplacée(s) dans la zone du canal de façonnage (7, 30) de façon à ce que l'écart des surfaces de délimitation du canal de façonnage (7, 30) changent dans la direction de la course.

17. Procédé selon l'une des revendications 1 à 16, **caractérisé en ce qu'** une bande de façonnage (6) imperméable ou de telles bandes de façonnage (27, 28) est/sont utilisée(s).

18. Procédé selon l'une des revendications 1 à 17, **caractérisé en ce qu'** une bande de façonnage rendue antiadhésive (6) ou de telles bandes de bandes de façonnages (27, 28) est/sont utilisée(s).

19. Procédé selon l'une des revendications 1 à 18, **caractérisé en ce que** la bande porteuse (3, 26) est mise en circulation comme bande dite sans fin.

20. Procédé selon l'une des revendications 1 à 14, **caractérisé en ce que** la bande de façonnage (6) ou au moins l'une des bandes de façonnage (27, 28) est mise en circulation sans fin.

21. Procédé selon l'une des revendications 1 à 20, **caractérisé en ce qu'** une bande de façonnage (6) ou au moins une bande de façonnage (27) de longueur infinie est utilisée et tirée à partir d' une réserve de bande.

22. Procédé selon l'une des revendications 1 à 21, **caractérisé en ce qu'**une bande de façonnage (6) ou des bandes de façonnage (27, 28) est/sont utilisée(s) et s' étend/étendent au moins sur toute la largeur de la bande porteuse (3, 26).

23. Procédé selon l'une des revendications 1 à 22, **caractérisé en ce que** des cordons d' étanchéité sont installés sur les rebords de la bande porteuse (3, 26) et/ou de la bande de façonnage (6) ou d' au moins une bande de façonnage (27, 28).

24. Procédé selon l'une des revendications 1 à 23, **caractérisé en ce que** la matière plastique (38) est versée sur plusieurs points éloignés l'un de l'autre sur la largeur du canal de façonnage (7, 30).

25. Procédé selon l'une des revendications 1 à 24, **caractérisé en ce que** la matière plastique (38) est versée sur la bande de façonnage (6) ou l'une des bande de façonnage (27, 28).

26. Procédé selon l'une des revendications 1 à 25, **caractérisé en ce que** la bande pour machine à papier est chauffée dans le canal de façonnage (7, 30) et/ou après avoir quitté le canal de façonnage (7, 30).

27. Procédé selon la revendication 26, **caractérisé en ce que** la bande de machine à papier est chauffée par des cylindres chauffés et/ou par des dispositifs de chauffage externes.

28. Procédé selon l'une des revendications 1 à 27, **caractérisé en ce que** la bande pour machine à papier est maintenue en circulation après le recouvrement.

29. Procédé selon l'une des revendications 1 à 28, **caractérisé en ce que** l'écart entre les surfaces de délimitation du canal de façonnage (7, 30) est réglé entre 2 à 10 mm.

30. Dispositif de recouvrement (1, 21, 41) pour la production de bandes imperméables pour machine à papier par le recouvrement d' une bande porteuse (3, 26) avec une matière plastique (38) avec un canal de façonnage (7, 30) en forme de fente formé par des surfaces de délimitation en face l'une de l'autre, et avec un premier dispositif de guidage sur lequel la bande porteuse (3, 26) est tendue, et avec une bande de façonnage (6, 27) formant l'une des surfaces de délimitation et guidée par un second dispositif de guidage, ainsi qu' avec un dispositif d' alimentation (12, 36) disposé du côté de l'entrée du canal de façonnage (7, 30) pour la matière plastique (38) pâteuse ou liquide, le second dispositif de guidage comportant un dispositif de support (5, 33) venant soutenir la bande de façonnage (6, 27) sur le côté opposé au canal de façonnage (7, 30) le long du canal de façonnage (7, 30), la guidant ainsi à un écart défini de la surface de délimitation, **caractérisé en ce qu'**un dispositif de fermeture disposé du côté de l'entrée du canal de façonnage (7, 30) permet la fermeture temporaire du canal de façonnage (7, 30).

31. Dispositif de recouvrement selon la revendication 30, **caractérisé en ce que** le premier dispositif de guidage dans la zone du canal de façonnage (7) comporte également un dispositif de support (2), le dispositif de support (2) soutenant la bande porteuse (3) à l'état tendu sur le côté opposé à la bande de façonnage (6).

32. Dispositif de recouvrement selon la revendication 31, **caractérisé en ce que** les dispositifs de supports (2, 4) s'étendent essentiellement sur toute la longueur et/ou largeur du canal de façonnage (7).

33. Dispositif de recouvrement selon les revendications 31 ou 32, **caractérisé en ce que** le dispositif de support pour la bande porteuse (3) et le dispositif de support (4) pour la bande de façonnage (6) comportent respectivement une surface de support convexe (2) et une paroi de guidage concave (5).

34. Dispositif de recouvrement selon la revendication 33, **caractérisé en ce que** la surface de support convexe est formée par un cylindre de support (2) rotatif.

35. Dispositif de recouvrement selon les revendications 33 ou 34, **caractérisé en ce que** le dispositif de support (4) pour la bande de façonnage (6) comporte un moyen d' exercer une force dirigée vers la surface de guidage concave (5) et ayant un effet sur la bande de façonnage (6).

36. Dispositif de recouvrement selon la revendication 35, **caractérisé en ce que** le dispositif de support (4) comporte un dispositif à dépression agissant sur la bande de façonnage (6).

37. Dispositif de recouvrement selon la revendication 36, **caractérisé en ce que** la bande de façonnage (27) est formée magnétisable et que le dispositif de support correspondant (4) comporte des aimants.

38. Dispositif de recouvrement selon la revendication 30, **caractérisé en ce que** les surfaces de délimitation du canal de façonnage (30) sont formées d' une première et d' une seconde bandes de façonnage (27, 28) se déplaçant dans la même direction et à la même vitesse l'une que l'autre, et sont guidées sur leurs côtés opposés au canal de façonnage (30) par des dispositifs de support (32, 33) de façon à ce que les deux bandes de façonnage (27, 28) soient à un écart défini l'une de l'autre, la seconde bande de façonnage (28) étant guidée par un troisième dispositif de guidage.

39. Dispositif de recouvrement selon la revendication 38, **caractérisé en ce que** le premier dispositif de guidage est disposé de façon à ce que s' y déplace, tendue sur celui-ci, une bande porteuse (3, 26) collée à l'une des bandes de façonnage (27, 28) ou à distance des deux bandes de façonnage (27, 28) à travers le canal de façonnage (30).

40. Dispositif de recouvrement selon les revendications 38 ou 39, **caractérisé en ce que** la bande porteuse (26) et deux bandes de façonnage (27, 28) sont chacune tendues en ligne droite entre une paire de cylindres de guidage (22, 23 ou 24, 25 ou 42, 43).

41. Dispositif de recouvrement selon la revendication 40, **caractérisé en ce que** la seconde bande façonnage (28) est guidée conjointement avec la bande porteuse (26) par la même paire de cylindres de guidage (22, 23) de leurs dispositifs de guidage.

42. Dispositif de recouvrement selon la revendication 40, **caractérisé en ce que** le premier dispositif de guidage comporte sa propre pair de cylindres de guidage (42, 43) sur lesquels la bande porteuse (26) est déplacée indépendamment des bandes de façonnage (27, 28).

43. Dispositif de recouvrement selon la revendication 42, **caractérisé en ce que** le premier dispositif de guidage est déplaçable transversalement aux surfaces de délimitation du canal de façonnage (30).

44. Dispositif de recouvrement selon les revendications 40 à 43, **caractérisé en ce que** les dispositifs de support (32, 33) sont chacun disposés entre deux cylindres de guidage formant une paire (22, 23 ; 24, 25) dans la zone du canal de façonnage (30).

45. Dispositif de recouvrement selon l'une des revendications 30 à 44, **caractérisé en ce que** la bande porteuse (3, 26) et la bande de façonnage (6) ou les bandes de façonnage (27, 28) sont déplacées en parallèle dans la zone du canal de façonnage (7, 30).

46. Dispositif de recouvrement selon l'une des revendications 30 à 45, **caractérisé en ce que** la bande porteuse (26) et la bande de façonnage (6) ou les bandes de façonnage (27, 28) sont guidées dans la zone du canal de façonnage (7, 30) de façon à ce que l'écart entre les surfaces de délimitation du canal de façonnage (7, 30) change dans la direction de la course.

47. Dispositif de recouvrement selon l'une des revendications 30 à 46, **caractérisé en ce que** la bande de façonnage (6) ou les bandes de façonnage (27, 28) est/sont imperméable(s).

48. Dispositif de recouvrement selon l'une des revendications 30 à 47, **caractérisé en ce que** la bande de façonnage (6) ou les bandes de façonnage (27, 28) est/sont rendue(s) antiadhésive(s).

49. Dispositif de recouvrement selon l'une des revendications 30 à 48, **caractérisé en ce que** le premier dispositif de guidage comporte au moins deux cylindres de guidage (2 ou 22, 23 ou 42, 43) sur lesquels la bande porteuse (3, 26) peut être tendue sous forme sans fin, puis mise en circulation au moyen d' un entraînement.

50. Dispositif de recouvrement selon la revendication 49, **caractérisé en ce qu'** au moins un des cylindres de guidage 2 ou 22, 23 ou 42, 43) est formé comme un cylindre tendeur.

51. Dispositif de recouvrement selon les revendications 49 ou 50, **caractérisé en ce que** l'entraînement peut être inversé et/ou que la vitesse de circulation peut être réglée.

52. Dispositif de recouvrement selon l'une des revendications 30 à 51, **caractérisé en ce que** la bande de façonnage (6) ou au moins l'une des bandes de façonnage (27) est d' une longueur finie et provient d' une réserve de bande.

53. Dispositif de recouvrement selon l'une des revendications 30 à 52, **caractérisé en ce que** la bande de façonnage (6) ou au moins l'une des bandes de façonnage (28) est formée sans fin et mise en circulation.

54. Dispositif de recouvrement selon l'une des revendications 30 à 53, **caractérisé en ce que** le dispositif d' alimentation de la matière plastique (38) comporte plusieurs organes d' alimentation (12, 36) répartis sur la largeur du canal de façonnage (7, 30).

55. Dispositif de recouvrement selon l'une des revendications 30 à 54, **caractérisé en ce que** le(les) dispositif(s) d' alimentation (12, 36) sont/est disposé(s) de façon à ce que la matière plastique (38) soit versée sur la bande de façonnage (6) ou l'une des bandes de façonnage (27, 28).

56. Dispositif de recouvrement selon l'une des revendications 30 à 55, **caractérisé en ce qu'** un dispositif de chauffage pour le réchauffement de la bande de machine à papier est disposé dans le canal de façonnage (7, 30) ou à la sortie du canal de façonnage (7, 30).

57. Dispositif de recouvrement selon la revendication 49, **caractérisé en ce que** le dispositif de chauffage est formé comme au moins un cylindre de chauffage sur lequel la bande de machine à papier est guidée et/ou comme un dispositif de réchauffement externe.

58. Dispositif de recouvrement selon l'une des revendications 30 à 57, **caractérisé en ce qu'** au moins l'un des dispositifs de guidage est formé de façon à ce que l'écart séparant les surfaces de délimitation du canal de façonnage (7, 30) puisse être réglé.

59. Dispositif de recouvrement selon l'une des revendications 30 à 57, **caractérisé en ce que** des cordons d' étanchéité peuvent être montés latéralement en saillie sur les dispositifs de guidage et/ou sur la bande de façonnage (6) ou l'une des bandes de façonnage (27, 28) et/ou sur la bande porteuse (3, 26).

60. Dispositif de recouvrement selon l'une des revendications 30 à 59, **caractérisé en ce que** la longueur du canal de façonnage (7, 30) est de 30 à 1500 mm dans la direction de la course.
